# EUROPÄISCHE PATENTSCHRIFT

(11) **EP 2 133 697 B1**
(45) Veröffentlichungstag und Bekanntmachung des Hinweises auf die Patenterteilung: **19.03.2014**
(21) Anmeldenummer: 09405084.6
(22) Anmeldetag: 25.05.2009
(51) Int. Cl.: G01P 3/38

(54) **Vorrichting und Verfahren zum Erfassen von Geschwindigkeiten einer Objektoberfläche**
Device and method for recording speeds of a surface of an object
Dispositif et procédé d'enregistrement de vitesses d'une surface d'objet

(30) Priorität: 10.06.2008 CH 8752008
(43) Veröffentlichungstag der Anmeldung: 16.12.2009
(73) Patentinhaber: Baumer Innotec AG, 8500 Frauenfeld (CH)
(72) Erfinder: Tiedeke, Joachim, CH-8280 Kreuzlingen (CH); Müller, Klaus Friedrich, 69120 Heidelberg (DE)
(74) Vertreter: Strauss, Steffen

(56) Entgegenhaltungen:
- DE-A1- 10 250 455
- DE-C1- 4 447 117
- RACCA R G ET AL: "HIGH-SPEED VIDEO ANALYSIS SYSTEM USING MULTIPLE SHUTTERED CHARGE-COUPLED DEVICE IMAGERS AND DIGITAL STORAGE", OPTICAL ENGINEERING, SOC. OF PHOTO-OPTICAL INSTRUMENTATION ENGINEERS, BELLINGHAM, Bd. 31, Nr. 6, 1. Juni 1992 (1992-06-01), Seiten 1369-1374, XP000278272, ISSN: 0091-3286, DOI: 10.1117/12.56173
- DIETMAYER K ET AL: "VERFAHREN ZUR BERUHRUNGSLOSEN ERFASSUNG EBENER BEWEGUNGEN MIT EINERCCD-KAMERA", TECHNISCHES MESSEN TM, R.OLDENBOURG VERLAG. MUNCHEN, DE, Bd. 61, Nr. 2, 1. Februar 1994 (1994-02-01), Seiten 65-74, XP000429830, ISSN: 0171-8096

## Beschreibung

Gegenstand der Erfindung ist eine Vorrichtung und ein Verfahren zum Erfassen von Geschwindigkeiten einer Objektoberfläche gemäss den Merkmalen der Patentansprüche 1 und 8.

Zur Messung von Geschwindigkeiten eines Objekts relativ zu seiner Umgebung kann eine Vielzahl unterschiedlicher Prinzipien genutzt werden. Oft sind in der industriellen Automatisierung Aufgabenstellungen anzutreffen, bei denen Lateralgeschwindigkeiten eines Objekts bzw. einer Objektoberfläche mit einem Sensor erfasst werden müssen, wobei sich die zu erfassende Objektoberfläche zumindest lokal annähernd in einer Ebene relativ zum Sensor bewegt. Häufig werden solche Geschwindigkeiten mit Hilfe einer Flächenkamera (CCD oder CMOS) durchgeführt. Dabei werden meist zwei zeitlich aufeinanderfolgende Bilder korreliert und die Verschiebung des Objekts in der Erfassungsebene zwischen den beiden Aufnahmezeitpunkten bestimmt. Für eine brauchbare Korrelation ist es notwendig, dass die Oberflächen der Objekte eine Struktur aufweisen, die eine Korrelation ermöglicht, also beispielsweise ein nicht periodisches Farbmuster oder eine Oberflächenrauheit. Objekte mit feinen Strukturen benötigen eine entsprechend hohe Auflösung der Optik und des Kamerachips. Damit eine Korrelation überhaupt möglich ist, muss ausserdem ein brauchbarer Teil jedes Bilds im folgenden Bild noch sichtbar sein. Üblicherweise muss die Überlappung der aufeinanderfolgenden Bilder etwa die Hälfte bis zwei Drittel der aufgenommenen Bildfläche betragen.

Bei grösseren Objektgeschwindigkeiten sind somit grössere Bildfelder der Kamera und/oder kürzere Aufnahmeintervalle erforderlich. Mit der Vergrösserung des Bildfeldes nimmt bei gleicher Pixelanzahl die Auflösung ab. Die Auflösung muss aber gross genug sein, damit die Strukturen der Objektoberfläche aufgelöst werden können. Die maximale erfassbare Geschwindigkeit hängt somit wesentlich von der aufzulösenden Strukturgrösse ab.

Die Aufnahmegeschwindigkeit der meisten herkömmlichen Kameras ist auf ca. 60 Bilder/s beschränkt. Schnellere Kameras sind entweder teuer oder haben eine eingeschränkte Auflösung, was der gestellten Aufgabe entgegensteht.

In der DE 44 47 117 C1 wird ein farbcodiertes Bilderkennungsverfahren zur Untersuchung von Partikelströmungen beschrieben. Hierbei wird eine dreidimensionale Ortsbestimmung von Objektpunkten durchgeführt.

Die DE 102 50 455 A1 beschreibt eine Vorrichtung zur berührungslosen und simultanen Messung verschiedener Geschwindigkeitsgradienten einer beliebig geformten und rauen Körperoberfläche mittels einer optischen Messmethode. Das Prinzip dieser Messvorrichtung beruht auf der dynamischen Lichtstreuung von im wesentlichen kohärenten Licht, das auf der Oberfläche des zu untersuchenden Körpers gestreut wird. Diese Vorrichtung gehört wegen der Entstehung eines charakteristischen Streulichtmusters (Speckle- Muster) zur Gruppe der Speckle-Messverfahren.

Es ist Aufgabe der vorliegenden Erfindung, eine kostengünstige Vorrichtung und ein Verfahren zu schaffen, mit denen selbst mit relativ kleinen erfassten Bildfeldern vergleichsweise hohe Geschwindigkeiten von Objektoberflächen messbar sind.

Diese Aufgabe wird gelöst durch eine Vorrichtung und durch ein Verfahren zum Erfassen von Geschwindigkeiten einer Objektoberfläche gemäss den Merkmalen der Patentansprüche 1 und 8.

Das erfindungsgemässe Verfahren beruht auf der Überlegung, dass wesentliche Strukturmerkmale der Objektoberfläche, deren Geschwindigkeit erfasst werden soll, bei Beleuchtung dieser Objektoberfläche mit Licht unterschiedlicher Farben erkennbar sind.

Die Objektoberfläche wird in kurzem zeitlichem Abstand zuerst mit einem energiereichen Lichtblitz eines ersten Farbspektrums und anschliessend mit einem energiereichen Lichtblitz eines zum ersten Farbspektrum möglichst unterschiedlichen zweiten Farbspektrums beleuchtet. Eine Abbildungsoptik bildet einen durch die Lichtblitze beleuchteten Erfassungsbereich der Objektoberfläche jeweils während der Dauer jedes der beiden Lichtblitze auf einen Detektor mit einem ein- oder zweidimensionalen Array lichtempfindlicher Sensorelemente ab. Den aneinander angrenzenden Sensorelementen sind alternierend Farbfilter für die beiden unterschiedlichen Farbspektren vorgelagert. Eine Bildverarbeitungseinheit trennt die beiden kurz nacheinander aufgenommenen Teilbilder und ermittelt gemeinsame Strukturmerkmale dieser Teilbilder. Die relative Verschiebung dieser auf den Detektor abgebildeten Strukturmerkmale zwischen dem ersten und dem zweiten Teilbild entspricht bis auf den Abbildungsmassstab der Abbildungsoptik der Verschiebung der Objektoberfläche während der Dauer des zeitlichen Abstandes der beiden Lichtblitze. Zusammen mit dem bekannten Skalierungsfaktor der Abbildungsoptik können auf diese Weise Betrag und

Richtung der Geschwindigkeit der Objektoberfläche in der Erfassungsebene bestimmt werden. Grundsätzlich könnten beliebige Bewegungen des Oberflächenabschnitts im Raum erfasst werden, wenn z.B. zusätzlich die relative Lage und/oder Grösse mehrerer zueinander beabstandeter Strukturmerkmale und deren Änderung erfasst und/oder Signale weiterer Sensoren erfasst und verarbeitet würden. In der Regel genügt aber die Erfassung von Lateralbewegungen, die zumindest annähernd in der Fokalebene bzw. orthogonal zur optischen Achse der Abbildungsoptik erfolgen.

Anstelle eines einzigen Detektors mit alternierenden Farbmasken bei jedem Pixel können auch zwei möglichst identische Detektoren verwendet werden, wobei in diesem Fall ein dichroitischer Spiegel zwischen der Abbildungsoptik und den beiden Detektoren angeordnet ist. Dieser sorgt dafür, dass auf jeden der Detektoren jeweils nur die Abbildungen der jeweils zugehörigen Farbe auftreffen. Bei dieser Anordnung ist die Auflösung der Detektoreinrichtung grösser, da bei jedem der Detektoren sämtliche Pixel zum Ermitteln der Strukturverschiebung benutzt werden können. Durch Aufnahme einer statischen Struktur bzw. einer unbewegten Objektoberfläche können die beiden Detektoren elektronisch justiert werden. Dabei wird ein Offsetvektor zwischen den Pixeln der beiden Detektoren ermittelt und gespeichert.

Bei einer vorteilhaften Ausgestaltung der Erfindung erfolgt die Beleuchtung mit den beiden unterschiedlichen Lichtspektren zumindest annähernd aus der gleichen Richtung bzw. zumindest annähernd unter dem gleichen Einfallswinkel bezüglich der optischen Achse der Abbildungsoptik, sodass Strukturmerkmale bei beiden Beleuchtungssituationen möglichst gleich auf den oder die Detektoren abgebildet werden. Dies ist insbesondere dann vorteilhaft, wenn die dreidimensionale Oberflächenstruktur aufgrund des von den Lichtquellen erzeugten Schattenwurfs erfasst werden soll. Die beiden Lichtquellen können dazu z.B. unmittelbar nebeneinander angeordnet sein. Insbesondere kann das Licht der beiden Lichtquellen über eine gemeinsame Beleuchtungsoptik abgestrahlt werden.

Eine Steuerelektronik kontrolliert sowohl die Ansteuerung der Lichtquellen als auch die Erfassung und Auswertung des an der Objektoberfläche gestreuten und auf den oder die Detektoren abgebildeten Lichts. Im Vergleich zu herkömmlichen Geschwindigkeitssensoren, welche durch Auswertung der Verschiebung von Strukturmerkmalen einer Objektoberfläche deren Geschwindigkeit ermitteln, können bei der erfindungsgemässen Vorrichtung durch eine sehr schnelle Abfolge der unterschiedlichen Farbblitze vergleichsweise hohe Geschwindigkeiten erfasst werden. Insbesondere besteht auch die Möglichkeit, den zeitlichen Abstand zweier aufeinanderfolgender Farbblitze zu variieren und z.B. in Abhängigkeit der jeweils aus vorhergehenden Messungen bestimmten Geschwindigkeiten anzupassen bzw. zu optimieren.

Anhand einiger Figuren wird die Erfindung im Folgenden näher beschrieben. Dabei zeigen
- Figur 1: eine zwei separate Lichtquellen umfassende erste Vorrichtung zur Erfassung der Geschwindigkeit einer Objektoberfläche,
- Figur 2: eine weitere Vorrichtung zur Erfassung der Oberflächengeschwindigkeit mit zwei nahe beieinander angeordneten Lichtquellen und einer gemeinsamen Beleuchtungsoptik,
- Figur 3: eine mögliche Anordnung von Farbfiltern bei einem Detektor gemäss Figur 1,
- Figur 4: eine weitere Vorrichtung mit zwei Detektoren und einem dichroitischen Spiegel.

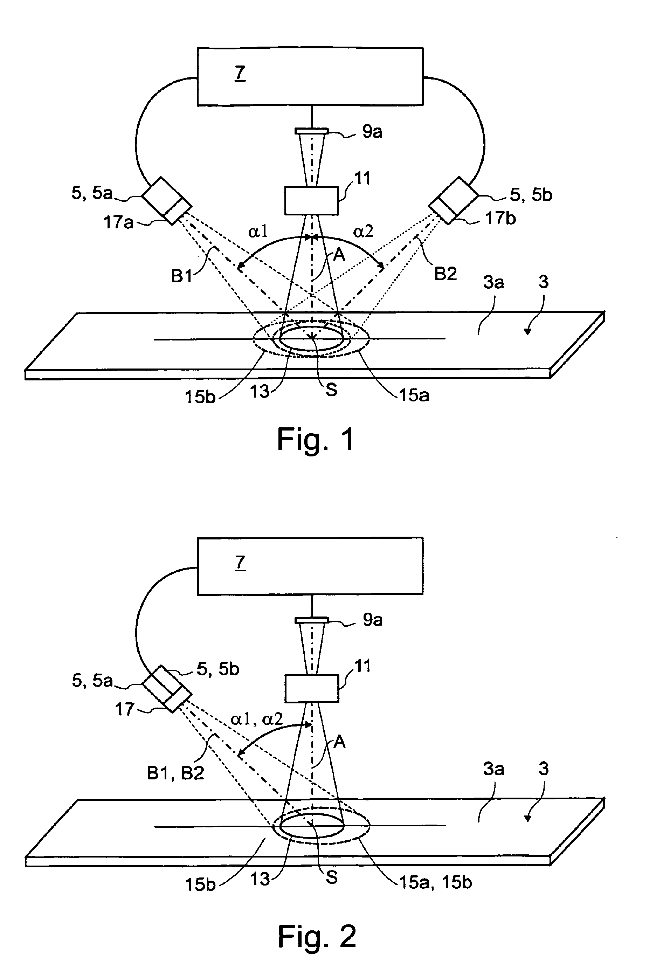

Figur 1 zeigt schematisch eine erste Ausgestaltung einer Vorrichtung 1 zur Erfassung der lokalen Geschwindigkeit einer Objektoberfläche 3a eines Objekts 3.

Die Vorrichtung 1 umfasst eine Beleuchtungseinrichtung 5 mit einer ersten Lichtquelle 5a und einer zweiten Lichtquelle 5b, wobei diese Lichtquellen 5a von einer Steuerung 7 angesteuert bzw. kontrolliert werden, einen mit der Steuerung 7 verbundenen optischen Detektor 9 und eine Abbildungsoptik 11. Die zu erfassende Objektoberfläche 3a schneidet die optische Achse A der Abbildungsoptik 11 an einem Schnittpunkt S, wobei dieser Schnittpunkt S innerhalb eines ausreichend scharf auf den Detektor 9 abbildbaren Erfassungsbereichs 13 der Objektoberfläche 3a liegt. Vorzugsweise sind die Objektoberfläche 3a und die zu erfassenden Geschwindigkeitsvektoren orthogonal zur optischen Achse A ausgerichtet.

Bei der Anordnung gemäss Figur 1 sind die Lichtquellen 5a, 5b separat derart an einer (nicht dargestellten) Halterung beabstandet zur Objektoberfläche 3a des zu erfassenden Objekts 3 montiert und ausgerichtet, dass der Erfassungsbereich 13 vollständig innerhalb des von der ersten Lichtquelle 5a auf der Objektoberfläche 3a gebildeten ersten Lichtflecks 15a und des von der zweiten Lichtquelle 5b auf der Objektoberfläche 3a gebildeten zweiten Lichtflecks 15b liegt. Die Lichtquellen 5a, 5b können je eine Beleuchtungsoptik 17a, 17b umfassen, welche das jeweilige Licht zu einem Lichtstrahl bzw. Lichtkegel bündelt. Die zugehörigen Lichtachsen B1 und B2 sind jeweils durch strichpunktierte Linien zwischen den Lichtquellen 5a, 5b und dem Schnittpunkt S der optischen Achse A mit der Objektoberfläche 3a dargestellt. Die zwischen den Lichtachsen B1 bzw. B2 und der optischen Achse A eingeschlossenen Einfallswinkel α1 bzw. α2 liegen vorzugsweise betragsmässig zwischen etwa 30° und etwa 60°, können aber auch grösser oder kleiner sein. Einfallswinkel α1 bzw. α2 können z.B. abhängig von den Streu- und

Reflexionseigenschaften der zu erfassenden Objektoberfläche 3a optimiert werden.

Besonders vorteilhaft ist eine Anordnung gemäss Figur 2, wo die beiden Lichtquellen 5a, 5b die Objektoberfläche 3a über eine gemeinsame Abbildungsoptik 17 beleuchten können. Die Einfallswinkel α1 bzw. α2 sind zumindest annähernd gleich gross und die Lichtachsen B1, B2 sind zumindest näherungsweise identisch. Die Streu- und

Reflexionseigenschaften der Objektoberfläche 3a sind für beide Lichtquellen 5a, 5b nahezu identisch. Alternativ könnten die beiden Lichtquellen 5a, 5b auch sehr nahe nebeneinander angeordnet sein und den Erfassungsbereich 13 je über eigene Abbildungsoptiken 17a, 17b aus ähnlichen Richtungen beleuchten. Die Lichtquellen 5a, 5b sind vorzugsweise so angeordnet und ausgerichtet, dass ihre Lichtachsen B1 und B2 den Schnittpunkt S der optischen Achse A der Abbildungsoptik 11 mit der Objektoberfläche 3a schneiden und einen kleineren Winkel als etwa 30° einschliessen.

Die Lichtquellen 5a und 5b haben unterschiedliche Emissionsspektren die sich vorzugsweise nicht oder nur minimal oder unwesentlich überlappen und können - durch die Steuerung 7 kontrolliert und zeitlich koordiniert - kurze energiereiche Lichtpulse bzw. Lichtblitze in der jeweiligen Lichtfarbe aussenden. Die Lichtspektren können im sichtbaren und/oder im unsichtbaren Wellenlängenbereich angeordnet sein. Vorzugsweise sind die Lichtquellen 5a, 5b Leuchtdioden oder Laserdioden, welche bereits Licht in eng begrenzten Spektralbereichen emittieren. Solche Halbleiterlichtquellen können zum Teil sehr hohe Ströme in der Grössenordnung von z.B. etwa 0.1A bis etwa 10A verkraften, wenn sie nur sehr kurzeitig (z.B. << 1 µs) angesteuert werden und danach entsprechend lange inaktiv sind. Alternativ können die Lichtquellen 5a, 5b auch ein Leuchtmittel mit einem relativ breiten Frequenzspektrum und mit Farbfiltern verwendet werden, wobei die Farbfilter nur für gewisse Spektralbereiche durchlässig sind. Bei zwei Lichtquellen 5a, 5b können z.B. Kantenfilter verwendet werden, welche im Wesentlichen nur für Licht oberhalb bzw. unterhalb einer bestimmten Grenzfrequenz durchlässig sind. Bei mehreren Lichtquellen 5a, 5b werden in analoger Weise Bandpassfilter benutzt.

Zur Erzeugung sehr kurzer Lichtpulse können die einzelnen Lichtquellen 5a, 5b für entsprechend kurze Dauer angesteuert werden. Alternativ oder zusätzlich können Zeitpunkte und Dauer der Lichtpulse auch über shutter bzw. elektronische Verschlüsse gesteuert werden. Bei einer speziellen Ausführung könnten z.B. abweichend von der Darstellung in Figur 2 die Lichtquellen 5a, 5b als gemeinsame Lichtquelle mit zwei nachgelagerten Farbfiltern und individuell von der Steuerung 7 kontrollierbaren Verschlüssen ausgebildet sein.

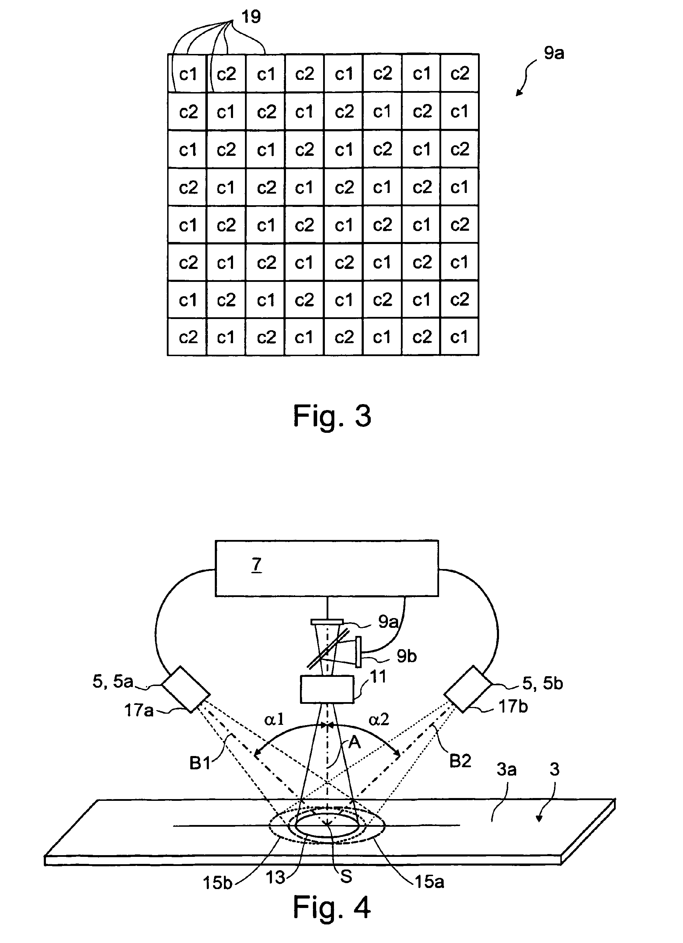

Figur 3 zeigt schematisch eine Ansicht eines ersten Detektors 9a auf der der Abbildungsoptik 11 zugewandten Seite. Der Detektor 9a umfasst ein zweidimensionales Array aus 8x8 Pixeln 19 bzw. photoelektrischen Elementen oder Sensorelementen, wobei jedem Pixel 19 ein Farbfilter vorgelagert ist. Die Farbfilter sind alternierend auf die Farbspektren der beiden Lichtquellen 5a und 5b abgestimmt. Die mit "c1" bezeichneten Farbfilter sind durchlässig für Licht der ersten Lichtquelle 5a, nicht jedoch für Licht der zweiten Lichtquelle 5b. Die mit "c2" bezeichneten Farbfilter sind durchlässig für Licht der zweiten Lichtquelle 5b, nicht jedoch für Licht der ersten Lichtquelle 5a.

Zur Messung der Objektgeschwindigkeit bzw. der Geschwindigkeitskomponente der Objektoberfläche 3a im Bereich der optischen Achse A in einer Ebene orthogonal zur optischen Achse A werden jeweils in kurzem zeitlichem Abstand - dieser kann z.B. in der Grössenordnung von einigen Mikrosekunden bis zu einigen Millisekunden liegen je ein Lichtpuls der ersten Lichtquelle 5a und anschliessend der zweiten Lichtquelle 5b emittiert. Die Pixel 19 mit den "c1"-Farbfiltern erfassen das erste Strukturbild der Objektoberfläche 3a, die Pixel 19 mit den "c2"-Filtern das entsprechend der Objektgeschwindigkeit räumlich verschobene zweite Strukturbild. Eine Bildverarbeitungseinheit der Steuerung 7 ermittelt gemeinsame Strukturmerkmale der beiden Aufnahmen. Nach Division durch den Zeitversatz der beiden Lichtblitze und

Multiplikation mit dem Skalierungsfaktor der Abbildungsoptik 11 ergibt sich die Geschwindigkeit der Objektoberfläche 3a an der Stelle des Erfassungsbereichs 13 bzw. die entsprechenden Geschwindigkeitskomponenten in den beiden Richtungen des Detektorarrays.

In analoger Weise können mit eindimensionalen Arrays bzw. mit Detektorzeilen eindimensionale Geschwindigkeiten bestimmt werden. Dies ist insbesondere dann vorteilhaft, wenn nur eine Geschwindigkeitskomponente erfasst werden muss, oder wenn bekannt ist, dass sich ein Objekt 3 nur in der entsprechenden Richtung bewegen kann. Selbstverständlich können in analoger Weise mit einem und/oder mehreren ein- und/oder zweidimensionalen Detektorarrays mit zugehörigen Abbildungsoptiken 11 auch Geschwindigkeiten an mehreren Stellen einer Objektoberfläche 3a bzw. lokale Geschwindigkeiten oder Geschwindigkeitskomponenten einzelner Teile der Objektoberfläche 3a erfasst werden. Im Falle mehrerer erster Detektoren 9a und gegebenenfalls zugeordneter zweiter Detektoren 9b können diese jeweils gleichzeitig oder zeitlich leicht verzögert mit Lichtpulsen der beiden Lichtquellen 5a, 5b beleuchtet werden. Alternativ kann jedem der Detektoren 9 ein separates Lichtquellenpaar 5a, 5b zugeordnet sein.

Durch Kombination bzw. gemeinsame Verarbeitung von Messergebnissen mehrerer Detektoren 9 kann die Steuerung 7 z.B. Informationen über Drehbewegungen der Objektoberfläche 3a und/oder des Objekts 3 herleiten. Bei der Verarbeitung solcher Messgrössen kann die Steuerung 7 auch gespeicherte oder vorgebbare Informationen über die Geometrie bzw. über Form und Abmessungen des Objekts 3 und/oder über die Bewegungsfreiheitsgrade bzw. die Kinematik des Objekts 3 mit verwenden. Auf diese Weise können nicht nur Translations- und Drehbewegungen der Objektoberfläche 3a in der Erfassungsebene bestimmt werden, sondern beliebige Bewegungen der Objektoberfläche 3a und/oder des Objekts 3 im dreidimensionalen Raum. Zudem kann die Bildverarbeitungssoftware zum Auswerten der Informationen eines oder mehrerer Detektoren 9a, 9b so ausgebildet sein, dass z.B. aufgrund der Änderung der Grösse und/oder der Schärfe erkannter Strukturmerkmale Informationen über Bewegungen oder Bewegungskomponenten orthogonal zu der bzw. den optischen Achsen A ermittelt werden können.

Entsprechend der jeweiligen Gegebenheiten und

Anforderungen (z.B. Strukturgrösse der Objektoberfläche 3a, zu messende Objektgeschwindigkeiten, Objektabstand, Kosten etc.) können verschiedene Parameter wie Pixelzahl und -Anordnung, Art, Anzahl, Ausbildung und Anordnung der Lichtquellen, Ansteuerung der Lichtquellen, Auswertung der Detektorsignale, Objektabstand und Schärfentiefe der Abbildungsoptik 11 etc. optimiert werden. Als Detektoren können z.B. vorzugsweise handelsübliche Arrays mit 640x480 Pixeln 19 verwendet werden.

Die Farbfilter sind vorzugsweise wie die Rot/Grün/Blau-Filter bei einem CCD- oder CMOS-Empfängerchip für Kameras direkt an der Oberfläche der Pixel 19 ausgebildet. Bei Verwendung entsprechender Lichtquellen 5a, 5b mit einer Farbkombination aus den Farben Rot, Grün und Blau können direkt solche handelsüblichen Bildsensoren verwendet werden. Allerdings sind bei diesen sog. Bayer-Sensoren jeweils zwei von vier aneinander angrenzenden Farbfiltern grün und je eines rot bzw. blau. Wenn nur zwei dieser Farben genutzt werden, ist sowohl die Ortsauflösung als auch die Empfindlichkeit nicht optimal. Deshalb können alternativ auch Detektoren mit nur zwei schachbrettartig angeordneten Farben benutzt werden, wie dies in Figur 3 dargestellt ist. In anderer Hinsicht können mehr als zwei unterschiedliche Farbfilter aber auch vorteilhaft sein, falls auch für jede dieser Farben eine entsprechende Lichtquelle 5a, 5b vorgesehen ist. Falls eine an der Objektoberfläche 3a ausgebildete Struktur aufgrund ihrer Farbe im Lichte einer dieser Lichtquellen 5a, 5b nicht oder nur schlecht erkennbar ist, kann die Steuerung 7 in Abhängigkeit der Qualität der Mustererkennung nach einem vorgebbaren bzw. in der Steuerungssoftware festgelegten Algorithmus zu anderen Lichtquellenkombinationen wechseln.

Alternativ oder zusätzlich kann die Steuerung 7 so ausgebildet sein, dass sie die Intensität bzw. Energiedichte und/oder Dauer der Lichtblitze und/oder die Verstärkung der Pixelsignale in Abhängigkeit des Kontrasts oder der Erkennungsgüte der Strukturen für einen oder mehrere der Farbkanäle regelt oder verändert.

Wesentlich dabei ist, dass Farb- und/oder Strukturmuster der Objektoberfläche 3a im Licht von mindestens zwei der Lichtquellen 5a, 5b erkennbar sind.

Figur 4 zeigt eine alternative weitere Vorrichtung 1 zur Erfassung der Oberflächengeschwindigkeit des Objekts 3. Sie unterscheidet sich von einer Anordnung gemäss Figur 1 dadurch, dass anstelle eines ersten Detektors 9a mit alternierenden Farbfiltern bei den einzelnen Pixeln 19 zwei möglichst identische Detektoren 9a, 9b vorgesehen sind, und dass die Abbildungsoptik 11 die Struktur Objektoberfläche 3a über einen dichroitischen Spiegel 21 auf die beiden Detektoren 9a, 9b abbildet. Dabei wird die mit einem Lichtblitz der ersten Lichtquelle 5a beleuchtete Struktur nur auf den ersten Detektor 9a abgebildet und die mit einem Lichtblitz der zweiten Lichtquelle 5b beleuchtete Struktur nur auf den zweiten Detektor 9b. Mittels einer Initialisierungsmessung bei einem unbewegten Objekt 3 können die beiden Detektoren 9a, 9b elektronisch justiert werden. Dabei ermittelt und speichert die Steuerung 7 einen Offsetvektor zwischen den korrespondierenden Pixeln 19 der beiden Detektoren 9a, 9b.

Bei allen Ausführungsformen kann die Steuerung 7 die Dauer eines Messintervalls bzw. den zeitlichen Abstand zweier aufeinander folgender Messungen mit je zwei Lichtpulsen und der Auswertung der erfassten zugehörigen Strukturbilder vorgeben und z.B. innerhalb vorgebbarer Grenzen zufällig oder systematisch variieren. Dadurch kann der Einfluss allfälliger optischer und/oder elektrischer Störungen minimiert werden.

Zur Verdeutlichung der Wirkung der Erfindung nachfolgend ein beispielhafter vergleich:

Papier hat eine Strukturgrösse von ca. 0.01mm. Bei einer herkömmlichen Geschwindigkeitsmessung mit einer Kamera, die einen Chip mit 640 Pixeln Breite aufweist, wird ein Feld von maximal 3.2mm für die Abbildung benötigt. Bei 20ms Frame Abstand zwischen der Erfassung einer ersten Position und einer zweiten Position des Papiers und bei einer maximal erlaubten Verschiebung um die Hälfte der Breite bedeutet dies eine Papierverschiebung von 1.6mm in 20ms. Die maximal erfassbare Geschwindigkeit ist herkömmlich 80mm/s.

Mit der erfindungsgemässen Vorrichtung 1 mit gleicher Pixelzahl und mit einem zeitlichen Abstand der aufeinander folgenden Lichtpulse von 0.5ms hingegen können 1.6mm in 0.5ms erfasst werden. Dies entspricht einer Geschwindigkeit von 3200mm/s.

## Patentansprüche

1. Vorrichtung (1) zum Erfassen von Geschwindigkeiten eines Objekts (3), umfassend mindestens einen ersten Detektor (9a) mit mehreren zu einem ein- oder zweidimensionalen Array angeordneten lichtempfindlichen Pixeln (19),
eine Beleuchtungseinrichtung (5),
eine Abbildungsoptik (11),
eine Steuereinheit und
eine Bildverarbeitungseinheit,
**dadurch gekennzeichnet, dass** die Abbildungsoptik (11) zum Abbilden eines von der Beleuchtungsvorrichtung (5) beleuchtbaren Erfassungsbereiches (13) auf den mindestens einen ersten Detektor (9a) vorgesehen ist,
wobei der Erfassungsbereich (13) wenigstens ein Teil der Oberfläche (3a) des Objektes (3) umfasst,
wobei die Beleuchtungseinrichtung (5) eine erste Lichtquelle (5a) zum Erzeugen eines ersten Lichtspektrums und eine zweite Lichtquelle (5b) zum Erzeugen eines vom ersten Lichtspektrum unterscheidbaren zweiten Lichtspektrums umfasst, wobei die Steuereinheit in kurzem zeitlichem Abstand die erste Lichtquelle (5a) zum Aussenden eines energiereichen Lichtblitzes und anschliessend die zweite Lichtquelle (5b) zum Aussenden eines energiereichen Lichtblitzes ansteuert, wobei die Abbildungsoptik (11) den durch die Lichtblitze beleuchteten Erfassungsbereich (13) während der Dauer der beiden Lichtblitze auf den mindestens einen ersten Detektor (9a) abbildet, wobei
die Bildverarbeitungseinheit diese Abbildung in zwei Teilbilder des jeweils ersten und zweiten Lichtspektrums zerlegt und daraus gemeinsame Strukturmerkmale dieser Teilbilder ermittelt,
und wobei Mittel vorgesehen sind, um aus der Verschiebung erkannter Strukturmerkmale und aus der Verzögerungszeit zwischen den aufeinander folgenden Lichtpulsen die Geschwindigkeit des Objekts (3) zu berechnen.

2. Vorrichtung (1) nach Anspruch 1, **dadurch gekennzeichnet, dass** die erste Lichtquelle (5a) und die zweite Lichtquelle (5b) Leuchtdioden oder Laserdioden sind, oder dass die Lichtquellen (5a, 5b) ein Leuchtmittel mit einem relativ breiten Frequenzspektrum und unterschiedliche Farbfilter umfassen.

3. Vorrichtung (1) nach einem der vorhergehenden Ansprüche, **dadurch gekennzeichnet, dass** die Lichtquellen (5a, 5b) zum Bündeln des jeweiligen Lichts zu einem Lichtstrahl oder Lichtkegel je eine Beleuchtungsoptik (17a, 17b) oder eine gemeinsame Beleuchtungsoptik (17) umfassen.

4. Vorrichtung nach Anspruch 3, **dadurch gekennzeichnet, dass** die Beleuchtungsoptik (17) bzw. die Beleuchtungsoptiken (17a, 17b) der Lichtquellen (5a, 5b) so angeordnet und ausgerichtet sind, dass die zugehörigen Lichtstrahlen oder Lichtkegel zumindest annähernd aus derselben Richtung auf die Objektoberfläche (3a) auftreffen.

5. Vorrichtung nach einem der vorhergehenden Ansprüche, **dadurch gekennzeichnet, dass** den zu einem Array angeordneten Pixeln (19) des mindestens einen ersten Detektors (9a) alternierend Farbfilter mit unterschiedlichen Farben vorgelagert sind, wobei eine dieser Farben für das Licht der ersten Lichtquelle (5a) durchlässig ist, nicht jedoch für das Licht der zweiten Lichtquelle (5b), und wobei eine weitere dieser Farben für das Licht der zweiten Lichtquelle (5b) durchlässig ist, nicht jedoch für das Licht der ersten Lichtquelle (5a).

6. Vorrichtung (1) nach einem der Ansprüche 1 bis 4, **dadurch gekennzeichnet, dass** zusätzlich zum mindestens einen ersten Detektor (9a) mindestens ein zweiter Detektor (9b) vorgesehen ist, und dass zwischen der Erfassungsoptik (11) und den Detektoren (9a, 9b) ein dichroitischer Spiegel (21) angeordnet ist, derart, dass am Erfassungsbereich gestreutes Licht der ersten Lichtquelle (5a) auf den mindestens einen ersten Detektor (9a) und am Erfassungsbereich (13) gestreutes Licht der zweiten Lichtquelle (5b) auf den mindestens einen zweiten Detektor (9b) abbildbar ist.

7. Vorrichtung nach einem der vorhergehenden Ansprüche, **dadurch gekennzeichnet, dass** die Lichtquellen (5a, 5b) und der bzw. die Detektoren (9a, 9b) mit einer gemeinsamen elektronischen Steuerung (7) in Wirkverbindung stehen.

8. Verfahren zum Erfassen von Geschwindigkeiten eines Objekts (3) **gekennzeichnet durch** die folgenden Verfahrensschritte:
- ein Erfassungsbereich einer Oberfläche (3a) des Objekts (3) wird zu einem ersten Zeitpunkt mit einem ersten Lichtpuls eines ersten Farbspektrums beleuchtet,
- gestreutes Licht des ersten Lichtpulses an Strukturmerkmalen dieser Oberfläche (3a) innerhalb des Erfassungsbereiches wird farbselektiv auf lichtempfindliche Pixel (19) eines mindestens ersten Detektors (9a) mittels einer Abbildungsoptik (11) abgebildet,
- der Erfassungsbereich wird mit einer kurzen Verzögerungszeit nach dem ersten Lichtpuls mit einem zweiten Lichtpuls eines zweiten Farbspektrums beleuchtet,
- gestreutes Licht des zweiten Lichtpulses an den Strukturmerkmalen der Oberfläche (3a) des Objekts (3) innerhalb des Erfassungsbereiches wird farbselektiv mit der Abbildungsoptik (11) auf die lichtempfindlichen Pixel (19) des mindestens einen ersten Detektors (9a) abgebildet,
- die während der Dauer der beiden Lichtpulse erfolgte Abbildung wird in zwei Teilbilder des jeweils ersten und zweiten Lichtspektrums zerlegt,
- in den beiden Abbildungen werden gemeinsame Strukturmerkmale erfasst und deren relative Lage ermittelt und
- aus der Verschiebung erkannter gemeinsamer Strukturmerkmale und aus der Verzögerungszeit zwischen den aufeinander folgenden Lichtpulsen wird die Geschwindigkeit des Objektes (3) berechnet.

9. Verfahren nach Anspruch 8, **dadurch gekennzeichnet, dass** Geschwindigkeiten der Objektoberfläche (3a) an unterschiedlichen Stellen dieser Objektoberfläche (3a) anhand der Signale eines oder mehrerer erster Detektoren (9a) und gegebenenfalls eines oder mehrerer zweiter Detektoren (9b) ermittelt werden, und dass anhand der so erfassten Geschwindigkeiten Drehgeschwindigkeiten und/oder Komponenten von Drehgeschwindigkeiten der Objektoberfläche (3a) und /oder des Objekts (3) ermittelt werden.

## Claims

1. Device (1) for recording the speeds of an object (3), comprising at least one first detector (9a) with several light-sensitive pixels (19) arranged to form a one or two-dimensional array, an illumination device (5), an imaging lens (11), a control unit and an image processing unit, **characterized in that** the imaging lens (11) is to form an image of a sensing area (13) which can be illuminated by the illumination device (5) and on which at least one first detector (9a) is provided for, whereby the sensing area (13) comprises at least one part of the surface of the object (3), whereby the illumination device (5) comprises a first light source (5a) to generate a second light spectrum distinguishable from the first light spectrum, whereby at a short time interval the control unit triggers the first light source (5a) to emit a high-energy light flash and then triggers the second light source (5b) to emit a high-energy light flash, whereby the imaging lens (11) forms an image of the sensing area (13) illuminated by the light flashes for the duration of the two light flashes on the at least one first detector (9a), whereby the image processing unit separates this image into two part-images of the first and second light spectra respectively and from these detects common structural characteristics of these part-images, and whereby means are provided to calculate the speed of the object (3) from the displacement of detected structural characteristics and from the time delay between successive light pulses.

2. Device (1) in accordance with Claim 1, **characterized in that** the first light source (5a) and the second light source (5b) are light-emitting diodes or laser diodes, or that the light sources (5a, 5b) comprise a lamp with a relatively wide frequency spectrum and different color filters.

3. Device (1) in accordance with one of the above Claims, **characterized in that** in order to concentrate the light in question into a light beam or light cone, the light sources (5a, 5b) each have an illumination lens (17a, 17b) or one common illumination lens (17)

4. Device in accordance with Claim 3, **characterized in that** the illumination lens (17) or the illumination lenses (17a, 17b) of the light sources (5a, 5b) are arranged and aligned in such a way that the relevant light beams or light cones strike the surface of the object (3a) at least approximately from the same direction.

5. Device in accordance with one of the above Claims,
**characterized in that** alternating color filters with different colors are positioned in front of the pixels (19), which are arranged to form an array, of the at least one first detector (9a), whereby one of these colors is permeable for the light of the first light source (5a), but not for the light of the second light source (5b), and whereby one more of these colors is permeable for the light of the second light source (5b), but not for the light of the first light source (5a).

6. Device (1) in accordance with one of the Claims 1 to 4, **characterized in that** in addition to the at least one first detector (9a) at least one second detector (9b) is provided for, and that between the imaging lens (11) and the detectors (9a, 9b) a dichroic mirror (21) is positioned in such a way that light scattered from the first light source (5a) onto the sensing range can be recorded on the at least one first detector (9a) and light scattered from the second light source (5b) onto the sensing range (13) can be recorded on the at least one second detector (9b).

7. Device in accordance with one of the above Claims, **characterized in that** the light sources (5a, 5b) and the detector(s) (9a, 9b) are in operative connection with a common electronic controller (7).

8. Process for recording the speeds of an object (3), **characterized by** the following process stages:
- a sensing range of a surface (3a) of the object (3) is illuminated at a first point in time with a first light pulse of a first color spectrum,
- light from the first light pulse scattered onto structural characteristics of this surface (3a) within the sensing area is color-selectively depicted on light-sensitive pixels (19) of at least one first detector (9a) by means of an imaging lens (11),
- the sensing area is illuminated with a second light pulse of a second color spectrum with a short time delay after the first light pulse,
- light from this second light pulse scattered onto the structural characteristics of the surface (3a) of the object (3) within the sensing area is color-selectively depicted on the light-sensitive pixels (19) of the at least one first detector (9a) by means of the imaging lens (11),
- the image generated during the duration of the two light pulses is separated into two part-images of the first and second light spectra respectively,
- common structural characteristics in the two images are recorded and their relative positions determined, and
- from the displacement of detected common structural characteristics and from the time delay between the successive light pulses, the speed of the object (3) is calculated.

9. Process in accordance with Claim 8, **characterized in that** speeds of the object surface (3a) are determined at different locations on this object surface (3a) on the basis of the signals of one or more first detectors (9a) and if required of one or more second detectors (9b), and that on the basis of the speeds recorded in this way, rotational speeds and / or components of rotational speeds of the object surface (3a) and / or of the object (3) are determined.

## Revendications

1. Dispositif (1) permettant de détecter les vitesses d'un objet (3), comprenant au moins un premier détecteur (9a) avec plusieurs pixels (19) sensibles à la lumière disposés en un array à une ou deux dimensions (19), un dispositif d'éclairage (5), une optique de reproduction (11), une unité de commande et une unité de traitement d'images, **caractérisé en ce que** l'optique de reproduction (11) est destinée à reproduire une plage de détection (13) pouvant être éclairée par le dispositif d'éclairage (5) sur le au moins un premier détecteur (9a), la plage de détection (13) comprenant au moins une partie de la surface de l'objet (3), le dispositif d'éclairage (5) comprenant une première source lumineuse (5a) destinée à générer un second spectre lumineux distinguable du premier spectre lumineux, l'unité de commande commandant à de faibles intervalles de temps la première source lumineuse (5a) pour émettre un éclair de lumière riche en énergie, puis la seconde source lumineuse (5b) pour émettre un éclair de lumière riche en énergie, l'optique de reproduction (11) reproduisant la plage de détection (13) éclairée par l'éclair de lumière pendant la durée des deux éclairs de lumière sur le au moins un premier détecteur (9a), l'unité de traitement d'images découpant cette reproduction en deux images partielles des premier et second spectres lumineux respectifs et déterminant ainsi des caractéristiques structurelles communes de ces images partielles, et des moyens étant prévus pour calculer la vitesse de l'objet (3) à partir du déplacement des caractéristiques structurelles connues et du temps de retard entre les impulsions lumineuses successives.

2. Dispositif (1) selon la revendication 1, **caractérisé en ce que** la première source lumineuse (5a) et la seconde source lumineuse (5b) sont des diodes lumineuses ou des diodes laser, ou **en ce que** les sources lumineuses (5a, 5b) comprennent une lampe avec un spectre de fréquence relativement large et différents filtres de couleur.

3. Dispositif (1) selon l'une des revendications précédentes, **caractérisé en ce que** les sources lumineuses (5a, 5b) comprennent une optique d'éclairage chacune (17a, 17b) ou une optique d'éclairage commune (17) pour fusionner la lumière respective en un rayon lumineux ou un cône lumineux.

4. Dispositif selon la revendication 3, **caractérisé en ce que** l'optique d'éclairage (17) ou les optiques d'éclairage (17a, 17b) des sources lumineuses (5a, 5b) sont disposées et orientées de sorte que les rayons lumineux ou les cônes lumineux correspondants apparaissent au moins approximativement de la même direction sur la surface de l'objet (3a).

5. Dispositif selon l'une des revendications précédentes,
**caractérisé en ce que** les pixels (19) disposés en un array du au moins un premier détecteur (9a) sont disposés alternativement en amont du filtre de couleur avec différentes couleurs, une de ces couleurs étant transparente pour la lumière de la première source lumineuse (5a) mais pas pour la lumière de la seconde source lumineuse (5b), et une autre de ces couleurs étant transparente pour la lumière de la seconde source lumineuse (5b) mais pas pour la lumière de la première source lumineuse (5a).

6. Dispositif (1) selon l'une des revendications 1 à 4, **caractérisé en ce qu'**en plus du au moins un premier détecteur (9a), au moins un second détecteur (9b) est prévu, et **en ce que**, entre l'optique de détection (11) et les détecteurs (9a, 9b), un miroir dichroïque (21) est disposé de telle sorte que la lumière diffusée sur la plage de détection de la première source lumineuse (5a) peut être reproduite sur le au moins un premier détecteur (9a) et la lumière diffusée sur la plage de détection (13) de la seconde source lumineuse (5b) peut être reproduite sur le au moins un second détecteur (9b).

7. Dispositif selon l'une des revendications précédentes, **caractérisé en ce que** les sources lumineuses (5a, 5b) et le ou les détecteurs (9a, 9b) sont en liaison active avec une commande électronique commune (7).

8. Procédé permettant de détecter les vitesses d'un objet (3) **caractérisé par** les étapes suivantes :
- une plage de détection d'une surface (3a) de l'objet (3) est éclairée à un premier moment avec une première impulsion lumineuse d'un premier spectre lumineux,
- la lumière diffusée de la première impulsion lumineuse sur les caractéristiques structurelles de cette surface (3a) à l'intérieur de la plage de détection est reproduite suivant la couleur sur les pixels sensibles à la lumière (19) du au moins un premier détecteur (9a) au moyen d'une optique de reproduction (11),
- le plage de détection est éclairée avec un petit temps de retard après la première impulsion lumineuse avec une seconde impulsion lumineuse d'un second spectre lumineux,
- la lumière diffusée de cette seconde impulsion lumineuse sur les caractéristiques structurelles de la surface (3a) de l'objet (3) à l'intérieur de la plage de détection a été reproduite suivant la couleur avec l'optique de reproduction (11) sur les pixels sensibles à la lumière (19) du au moins un premier détecteur (9a),
- la reproduction réalisée pendant la durée des deux impulsions lumineuses a été découpée en deux images partielles des premier et second spectres lumineux respectifs,
- dans les deux reproductions, des caractéristiques structurelles communes ont été détectées et leur position relative a été déterminée et
- à partir du déplacement des caractéristiques structurelles communes connues et du temps de retard entre les impulsions lumineuses successives, la vitesse de l'objet (3) a été calculée.

9. Procédé selon la revendication 8, **caractérisé en ce que** les vitesses de la surface d'objet (3a) sont déterminées à différents points de cette surface d'objet (3a) à l'aide de signaux d'un ou de plusieurs premiers détecteurs (9a) et, le cas échéant, d'un ou de plusieurs seconds détecteurs (9b), et **en ce que**, à l'aide des vitesses ainsi détectées, des vitesses de rotation et/ou des composants des vitesses de rotation de la surface d'objet (3a) et/ou de l'objet (3) sont déterminés.
